# EUROPÄISCHE PATENTSCHRIFT

(11) **EP 1 867 668 B1**
(45) Veröffentlichungstag und Bekanntmachung des Hinweises auf die Patenterteilung: **04.07.2012**
(21) Anmeldenummer: 07109259.7
(22) Anmeldetag: 31.05.2007
(51) Int. Cl.: C08G 12/12, C08G 12/32, C08G 12/38, B01J 10/00

(54) **Sprühkondensationsverfahren für die Harzherstellung**
Spray condensation method for resin manufacture
Procédé de condensation par vaporisation pour la fabrication de la résine

(30) Priorität: 13.06.2006 EP 06115396
(43) Veröffentlichungstag der Anmeldung: 19.12.2007
(73) Patentinhaber: BASF SE, 67056 Ludwigshafen (DE)
(72) Erfinder: Karim, Asif, 68159, Mannheim (DE)

(56) Entgegenhaltungen:
- WO-A-01/49817
- WO-A-02/077050
- WO-A-2006/027210
- DE-B- 1 034 358

## Beschreibung

Die vorliegende Erfindung betrifft ein Sprühkondensationsverfahren zur Herstellung von getrockneten Harzen in Pulverform aus Harnstoff und/oder Melamin und mindestens einem Aldehyd durch Vertropfung, das dadurch gekennzeichnet ist, dass die reaktionsfähige Mischung aus Harnstoff und/oder Melamin und mindestens einem Aldehyd in situ im Sprühreaktor erzeugt wird und die reaktionsfähige Mischung einen pH-Wert hat, der zwischen -0,75 und 0,75 liegt.

Die Herstellung von festen Aldehyd-Harnstoff-Kondensationsprodukten in Pulverform aus flüssigen, bzw. gelösten Ausgangsstoffen wird heute im großtechnischen Maßstab in der Regel in Mehrstufenprozessen durchgeführt. Der Verfahrensschritt der chemischen Reaktion erfolgt überwiegend in absatzweise oder kontinuierlich betriebenen Rührkessel. Das Reaktionsprodukt liegt danach in gelöster Form vor und muss durch energieaufwendige Trocknungs- und Zerkleinerungsprozesse in die gewünschte Form gebracht und das Lösungsmittel aufbereitet werden. Der Trocknungsprozess kann beispielsweise in einem Sprühturm vorgenommen werden. Eine Sprühtrocknung von ausreagierten Melamin-Formaldehyd-Kondensaten ist u.a. in den Dokumenten DE-B-2502168, DD 259 409, GB 2 178 749 oder US 4,814,422 beschrieben.

Eine große Schwierigkeit liegt in der Handhabbarkeit dieser im Rührkessel kondensierten hoch viskosen Lösungen oder Gelen. Pulverisierte Melamin-Formaldehyd-Kondensaten haben gegenüber Lösungen ferner den Vorteil, dass sie wesentlich länger lagerstabil sind und dass beim Versand der Transport von Wasser eingespart wird.

Die DE-A-22 33 428 beschreibt ein Verfahren zur Einkapselung von in einer reaktionsfähigen Flüssigkeit fein verteilten Substanzen nach dem Sprühkondensationsverfahren. Während der Sprühkondensation polymerisiert das reaktionsfähige System unter Bildung von Kapselwänden und es werden trockene Polymerkapseln erhalten. Als reaktionsfähiges System werden Vorkondensate aus Harnstoff- oder Melamin-Formaldehyd-Verbindungen genannt.

Die GB 949 968 beschreibt ein Verfahren zur Herstellung von organischem polymeren Material, wobei das organische Material oder geeignetes Ausgangsmaterial in heißes Gas versprüht wird, dessen Temperatur hoch genug ist, um das Schäumen oder Expandieren zu initialisieren. Es wird offenbart, dass Harnstoff-Formaldehydharze, die als Ausgangsmaterialien verwendet werden, in diesem heißen Strom aushärten.

Sprühpolymerisationsreaktionen, die eine Überlagerung des Prozesses einer Polymerisation mit einer Trocknung in einem Verfahrensschritt darstellen, sind seit Jahren bekannt. Hierbei wird eine breite Auswahl an Polymerisationsreaktionen genutzt (siehe z.B. WO 96/40427 und US 5,269,980). Im Allgemeinen werden kugelförmige Polymerpartikel mit einer vorbestimmten und kontrollierbaren Partikelgröße und monodisperser oder polydisperser Verteilung erzeugt.

In DE 1 034 358 wird beschrieben, dass sich pulverisierte Kondensationsprodukte herstellen lassen, wenn man Lösungen von Aminoplaste bildenden Verbindungen und Aldehyde oder von Methylolverbindungen der Aminoplaste bildenden Verbindungen durch Zugabe sauer wirkender Kondensationsmittel auf einen pH-Wert von 5 oder darunter bringt und unmittelbar danach bei erhöhter Temperatur versprüht. In den Beispielen beträgt der pH-Wert der Lösungen 3,5, 4,5 und 5.

In WO 2004/085050 wird die Herstellung von getrockneten Harzen in Pulverform mittels Sprükondensation beschrieben, wobei die Kondensation von mindestens einem flüssigen oder in einer Flüssigphase gelöstem Ausgangsstoff mit mindestens einem Aldehyd in einem Sprühreaktor vorgenommen wird. Es wird offenbart, dass die Vermischung der Ausgangstoffe bei unterschiedlichen pH-Werten erfolgen kann. Für die Melamin-Formaldehyd-Kondensation ist ein pH-Wert von 6,5 bis 12 bevorzugt, während für Harnstoff-Formaldehyd-Kondensation ein pH-Wert von 2 bis 7,5 vorteilhaft ist. Die Phenol-Formaldeyhd-Kondensation kann im sauren, neutralen wie im basischen vorgenommen werden.

In WO 2006/027210 wird beschrieben, dass sich die Morphologie der erzeugten Harzpartikel im erzeugten Pulver gezielt in ihren Partikelparametern beeinflussen lässt, wenn die Durchführung der Sprühkondensation durch Vertropfung erfolgt. Es wird beschrieben, dass sich ein geschäumtes, vorwiegend kugelförmiges Partikel mit oder ohne glatte Oberflächenabschnitte erzeugen lässt. Es wird offenbart, dass der pH-Wert der reaktionsfähigen Mischungen abhängig von den Ausgangsstoffen ist. Für die Melamin-Formaldehyd-Kondensation ist ein pH-Wert von 6,5 bis 12 bevorzugt, während für die Harnstoff-Formaldehyd-Kondensation ein pH-Wert von 1 bis 7,5 vorteilhaft ist.

Die im Stand der Technik genannten Rezepturen zur Herstellung von getrockneten Harzen beinhalten den Nachteil, dass sich die gewünschten Harze nur in Sprühtürmen mit einer Turmhöhe von mindestens 10 Meter unter Temperaturen von mindestens 140°C herstellen lassen. Ferner weisen die im Stand der Technik hergestellten Harzpartikel eine Wandstärke von größer als 5 µm auf. Bei einer thermischen Nachbehandlung zum Aufschäumen der Harzpartikel ist allerdings eine möglichst kleine Wandstärke wünschenswert.

Aufgabe der vorliegenden Erfindung ist es demnach, Rezepturen zur Herstellung von getrockneten Harzen, die sich zum späteren Aufschäumen eignen, aufzuzeigen, die sich in einer kürzeren Fallzeit und/oder bei niedrigeren Temperaturen zu getrockneten Harzen umsetzen lassen als im Stand der Technik beschrieben. Ferner sollten diese Harze eine zum Stand der Technik vergleichbare Partikelgröße aufweisen. Eine weitere Aufgabe bestand darin, Harzpartikel bereitzustellen, die eine geringe Wandstärke von kleiner 5 µm aufweisen.

Die Lösung dieser Aufgabe geht aus von dem bekannten Verfahren der Sprühkondensation zur Herstellung von Harzen in Pulverform aus Melamin, Harnstoff oder deren Gemisch und mindestens einem Aldehyd. Das erfindungsgemäße Verfahren ist dann dadurch gekennzeichnet, dass die reaktionsfähige Mischung aus Harnstoff und/oder Melamin und mindestens einem Aldehyd in situ im Sprühreaktor erzeugt wird und die reaktionsfähige Mischung einen pH-Wert hat, der zwischen -0,75 und 0,75 liegt.

Melamin wird üblicherweise in fester Form eingesetzt. Der Harnstoff wird fest, geschmolzen oder in Form einer wässrigen Lösung eingesetzt.

Das Aldehyd, bevorzugt Formaldehyd, wird vorteilhaft in Form einer 30 bis 70 gew.-%igen wässrigen Lösung oder in Form von Paraformaldehyd eingesetzt.

Es können alle dem Fachmann bekannten Mischungsverhältnisse eingestellt werden. Insbesondere wird pro 1 mol Melamin 1,2 bis 6 mol Aldehyd, bevorzugt Formaldehyd, und pro 1 mol Harnstoff 1,3 bis 3 mol Aldehyd, bevorzugt Formaldehyd, verwendet. Es können gegebenenfalls pro 1 mol Melamin und/oder Harnstoff 0,01 bis 0,9 mol, bevorzugt 0,01 bis 0,5 mol, insbesondere 0,01 bis 0,3 mol einer der sonstigen Verbindungen eingesetzt werden, die fähig sind, mit Aldehyden in einer Polykondensationsreaktion zu reagieren.

Die Ausgangsstoffe selbst können gegebenenfalls bereits in einem Lösemittel vorliegen. Bevorzugt ist das Lösemittel Wasser. Als Transportgas kann Luft oder ein übliches Inertgas wie Stickstoff verwendet werden.

Je nach Einsatzgebiet der erzeugten Harzpartikel können die Reaktion gegebenenfalls unmittelbar beeinflussende Hilfs- und Zusatzstoffe und/oder Wirk- und Aktivstoffe eingesetzt werden, wie
- ein- oder mehrwertige Alkohole, z.B. Methanol, Ethanol, 1-Propanol, 2-Propanol, 1-Butanol, 2-Butanol, tert-Butanol, Ethylenglykol, Diethylenglykol, Triethylenglykol, Polyethylenglykole, Butandiole, Pentandiole, Hexandiole, Trimethylolpropan, Neopentylglycol und Sorbitol
- Aminoalkohole, z.B. Ethanolamin, Diethanolamin und Triethanolamin
- grenzflächenaktive Stoffe (Tenside)
- Aceton, Tetrahydrofuran (Treibmittel)
- Lithiumchlorid, ε-Caprolactam.

Vorteilhaft wird 0 bis 50 Gew.-%, bezogen auf die reaktionsfähige Mischung, bevorzugt 10 bis 25 Gew.-%, Aceton als Additiv eingesetzt. Das Aceton kann bereits als Lösemittel für einen der Ausgangsstoffe eingesetzt werden oder der reaktionsfähigen Mischung in situ im Sprühreaktor zugesetzt werden.

Durch ein Einbringen bestimmter Wirk- oder Aktivstoffe in den Prozessablauf der Harzpartikelbildung werden diese in den entstehenden Harzpartikeln fein verteilt und fixiert, um so einen effizienten funktionellen Harzpartikel bereitzustellen. Zusätzlich verbleiben die während der Polykondensation entstehenden Stoffe in den Harzpartikeln fein verteilt und können bei einem Einsatz der getrockneten Harzpartikel entsprechende Wirkung, beispielsweise im Falle von Formaldehyd, biozide Wirkung, zeigen.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, S. 23 bis 66, beschrieben.

Beispielsweise weist der Sprühturm eine Höhe von typischerweise 2 bis 20 Meter, bevorzugt 5 bis 10 Meter und einen üblichen Durchmesser, typischerweise 0,5 bis 5 Metern, bevorzugt 1 bis 3 Metern. Der Reaktor kann aus mehreren Reaktorabschnitten bestehen, wobei bevorzugt der obere Teil, in dem sich die Vertropfungsanordnung befindet, zylindrisch gestaltet ist, während der untere Teil gegebenenfalls konisch ist. Bevorzugt ist der konische Bereich größer als der zylindrische.

Die Herstellung einer reaktionsfähigen Mischung aus den Ausgangsstoffen erfolgt vorteilhaft in situ direkt im Sprühreaktor. Die Reaktionskomponenten werden erst unmittelbar vor dem Vertropfen vermischt, so dass die Umsetzung ausschließlich im Tropfen während der Fallzeit, d.h. während der Verweilzeit im Sprühturm, stattfindet. Beispielsweise kann sich direkt über der Vertropfungsblende ein Mischungsreaktor befinden, in dem die Ausgangsstoffe unmittelbar vor dem Vertropfen, d.h. mit einer geringen Verweilzeit im Mischungsreaktor von beispielweise einer Sekunde, vermischt werden. Die spezielle Ausgestaltung des Mischungsreaktors kann vom Fachmann aufgrund der allgemeinen Kenntnisse an die jeweilige Reaktion und den verwendeten Sprühturm angepasst werden. Gegebenenfalls kann auch ein Teil der Vermischung oder die komplette Vermischung in den Sprühturm verlegt werden. Der Sprühturm würde sich in diesem Fall in mehrere Temperaturzonen aufteilen. Dabei weist die erste Zone durch den der entstandene Tropfen fällt, eine geringe Temperatur von beispielsweise Raumtemperatur auf, und stellt die Mischungszone dar. An diese Mischungszone schließt sich eine Reaktionszone mit einer höheren Temperatur von beispielsweise 50 bis 250°C an.

Die reaktionsfähige Mischung aus Harnstoff und/oder Melamin und Aldehyd weist einen pH-Wert von -0,75 bis 0,75, insbesondere von -0,5 bis 0,5 auf.

Es wurde gefunden, dass sich durch die gewählte pH-Wert Einstellung Harzpartikel mit einer dünnen formstabilen Schale und einem durch schlagartige Hitzeeinwirkung aufschäumbaren, wachsweichen Kern bilden. Es wurde gefunden, dass die Schale um so dünner ist je niedriger der pH-Wert der Reaktionslösung ist. Vorteilhaft weist die Schale eine Wandstärke von 0,01 bis 50 µm, insbesondere 0,1 bis 20 µm, bevorzugt 0,5 bis 5 µm, besonders bevorzugt 0,5 bis 2 µm auf.

Die vorliegende Erfindung betrifft daher ferner Harzpartikel, die nach dem erfindungsgemäßen Verfahren herstellbar sind und eine Wandstärke von 0,01 bis 5 µm, bevorzugt 0,1 bis 2 µm, insbesondere 0,01 bis 1 µm aufweisen.

Um eine verfrühte Kondensation vor dem Versprühen zu verhindern, kann es notwendig sein, die Ausgangsstoffe sowohl bei der Vermischung in dem beschriebenen Mischungsreaktor als auch in den Zuleitungen zu kühlen. Bevorzugte Temperaturen liegen bei - 40°C bis 30°C. Ebenfalls kann es notwendig sein, den Zulauf durch einen höheren Förderdruck in den Leitungen zu erhöhen. Wird die Kondensation durch Additive und/oder Katalysatoren eingeleitet, können diese erst kurz vor dem Vertropfen, beispielsweise direkt in den Mischungsreaktor zugegeben werden.

Die Ausgangsstoffe, bzw. die in situ hergestellte reaktionsfähige Mischung wird in einem Sprühreaktor vertropft. Bevorzugt wird die Vertropfung mittels Vibrationsvertropfung durchgeführt. Unter dem Begriff "Vertropfung" wird in der vorliegenden Erfindung die Aerosolerzeugung durch einzelne Blendenlöcher verstanden, wobei der entstehende Tropfendurchmesser die Dimension des Blendendurchmessers aufweist. Unter Vibrationsvertropfung wird eine angeregte, monodisperse Vertropfung verstanden.

Durch Vertropfung entstehen aus einem Flüssigkeitsstrahl durch Einschnürungen aufgrund von Oberflächenspannung einzelne Tropfen nahezu gleicher Größe, teilweise begleitet von Satellitentröpfchen. Die Länge des erzeugten Flüssigkeitsstrahls beträgt dabei nur wenige Vielfache seines Durchmessers. Die kinetische Energie der Tropfen ist im Vergleich zu Tropfen, die durch Verdüsung erzeugt werden, gering. Dadurch werden die Tropfen nur geringfügig in Rotation versetzt oder abgebremst und es bildet sich eine stationäre hydrodynamische Hülle aus, die den Tropfen umgibt. Somit ist die Oberfläche des Tropfens in der Lage, eine Schale zu bilden, solange Stoffe im Tropfen vorhanden sind, die eine solche Schalenbildung ermöglichen. Eine auf diese Weise begünstigte Schalenbildung ermöglicht formstabilere Oberflächen als bei der Verdüsung von Flüssigkeiten (siehe unten). Diese stabileren Schalen sind die Voraussetzung für die beschriebenen Aufschäumprozesse, da sich mit der Bildung einer definierten Schale auch ein definierter Kern ausbildet. Die Eigenschaften eines solchen Kerns lassen sich ebenso aus der geringeren Rotation ableiten, wie die Bildung einer stabilen Schale. Stoffe, die sich bei der Schalenbildung ergeben oder die für eben diese Schale verbraucht werden, befinden sich bei einer ruhigen, relativ stationären Oberfläche nicht in so großen Mengen im Kern, wie bei rotierenden Tropfen. Der Kern ruht ebenso und behält während der Schalenbildung eine gewisse Restreaktivität, die zum Aufschäumen von im Anschluss oder während des Prozesses vorliegenden Partikeln genutzt werden kann.

Im Fall der Vibrationsvertropfung kann der Strahlzerfall weiter homogenisiert werden, indem die zur Formung des Flüssigkeitsstrahldurchmessers verwendete Öffnung mechanisch in Schwingung versetzt wird. Die notwendige Anregungsfrequenz dieser Schwingung ergibt sich aus dem Volumenfluss der Flüssigkeit, der Oberflächenspannung der Flüssigkeit und dem Durchmesser der Öffnung. Die Anregungsfrequenz liegt typischerweise bei 10 kHz bis 35000 kHz, gegebenenfalls liegt die Frequenz, die dem Blendenlochdurchmesser, der Viskosität und dem Volumenstrom anzupassen ist, auch außerhalb des genannten Bereichs. Der Zerfall des Flüssigkeitsstrahls wird dabei in einer Art unterstützt, die sich auch auf die Oberfläche des Tropfens auswirkt und eine Oszillation des frisch gebildeten Tropfens vermindert. Die fallenden Tropfen weisen eine sehr geringe Oberflächenschwingung auf.

Weniger bevorzugt ist das Verdüsen der Ausgangsstoffe, bei dem mit hohem Druck die Flüssigkeiten in den Gasraum eingebracht werden und dabei in ein Aerosol überführt werden. Die entstehenden Tropfen weisen eine polydisperse Größenverteilung aufweisen, die stark um die mittlere Tropfengröße streuen. Beim Verdüsen wird die Flüssigkeit mit einer hohen Geschwindigkeit in den Gasraum eingebracht, so dass die Tropfen durch die Gasmoleküle stark abgebremst und dabei in Rotation versetzt werden. Diese Rotation hat großen Einfluss auf die Ausbildung einer stationären hydrodynamischen Hülle, welche sich unter diesen Bedingungen weniger gut einstellt. Dies hat zur Folge, dass die Verdunstung aus dem Tropfen erleichtert wird, die Bildung einer - den Tropfen im Fall begleitenden - stationären, hydrodynamischen Gashülle aber erschwert wird.

Das Vertropfen kann mittels einer oder mehrerer Düsen erfolgen. Die Vertropfungseinheit mit den Düsen befindet sich üblicherweise im oberen Abschnitt des Reaktors. Die Düsenöffnungen haben typischerweise einen Durchmesser von 1 µm bis 10 mm, vorzugsweise von 500 µm bis 3 mm. Im Allgemeinen sind mehrere Düsen symmetrisch angeordnet und gleichmäßig über den Querschnitt des Reaktorraumes verteilt. Bevorzugt sind sie ringförmig angeordnet und werden über eine gemeinsame Ringleitung mit der reaktionsfähigen Mischung versorgt. Im großtechnischen Einsatz sind üblicherweise 5 bis 50 Düsen pro Ringleitung vorgesehen, häufig 10 bis 30. Es werden bis zu 20 solcher Düsenringe verwendet. Geeignet sind alle dem Fachmann bekannte Düsen. Der Durchsatz pro Düse beträgt typischerweise bis zu 1500 kg/h, bevorzugt 100 bis 500 kg/h. Der Druck vor dem Versprühen kann in einem weiten Bereich eingestellt werden. Das Vertropfen kann bei Atmosphärendruck oder auch bei einem Überdruck von beispielsweise 2 bis 100 bar erfolgen. Der spezielle Überdruck kann vom Fachmann aufgrund seiner allgemeinen Kenntnisse an die jeweilige Reaktion und den verwendeten Sprühturm angepasst werden.

Die Vertropfung durch laminaren Strahlzerfall wird beispielsweise in Rev. Sci. Instr. Band 38 (1966), S. 502 bis 506, beschrieben. Vorteilhaft ist eine Tröpfchenerzeugung durch Vibrationsvertropfung. Bei der Vibrationsvertropfung beträgt der Tröpfchendurchmesser ungefähr das 1,9fache des Düsendurchmessers.

Das Vertropfen der Ausgangslösung erzeugt Tropfen mit einer kontrollierbaren Größe. Die Tröpfchen haben typischerweise einen Durchmesser von 1 µm bis 2 mm, bevorzugt von 5 µm bis 1 mm. Die Tröpfchengröße wird durch den Durchmesser der Düsenöffnung eingestellt. Ferner ist die Größe der Tröpfchen von dem Druck der reaktionsfähigen Mischung abhängig.

Der Druck vor dem Vertropfen kann in einem weiten Bereich eingestellt werden. Das Vertropfen kann bei Atmosphärendruck vorgenommen werden, es kann allerdings auch ein Überdruck von beispielsweise 2 bis 100 bar, bevorzugt 2 bis 5 bar, eingestellt werden.

Die reaktionsfähigen Ausgangsstoffe kondensieren d.h. reagieren innerhalb der Tropfen miteinander in einer entsprechenden Reaktionsatmosphäre. Die Reaktionsatmosphäre und die Verweilzeit der Tropfen werden den jeweiligen Kondensationsbedingungen und dem gewünschten Endprodukt angepasst. Die Verweilzeit muss lang genug sein, um einen gewünschten Grad der Kondensation zu erreichen. Die Geschwindigkeit der Reaktion liegt in der Größenordnung der Geschwindigkeit des Verdampfungsvorganges und der Verweilzeit im Reaktor.

Die Verweilzeit bestimmt sich unter anderem durch die im Reaktor herrschenden Strömungsbedingungen. So kann die vertropfte Reaktionsmischung mit oder ohne Gasströmung nach unten fallen. Durch entsprechende verfahrenstechnische Gestaltung, z. B. durch einen Gegenstrom des eingesetzten Treib- oder Begleitgases, kann die Fallgeschwindigkeit reduziert werden, die Strömungsrichtung umgekehrt werden oder wenn erforderlich die Tropfen in Schwebe gehalten werden. Somit ist die Verweilzeit beliebig einstellbar. Vorzugsweise strömt das Gas in Fallrichtung. Die Gasgeschwindigkeit ist so eingestellt, dass die Strömung im Reaktor gerichtet ist, so dass keine der allgemeinen Strömungsrichtung entgegen gesetzten Konvektionswirbel auftreten. Es werden Verweilzeiten von vorteilhaft 5 bis 150 Sekunden, bevorzugt von 30 bis 120 Sekunden, eingestellt.

Das Treibgas oder Begleitgas führt Lösemittel und nicht-kondensierte Ausgangsstoffe ab. Verwendet werden können Luft oder andere inerte Gase oder Gase, die die Reaktion katalytisch beeinflussen (wie Kohlen- oder Schwefeldioxid oder Rauchgas), oder Mischungen der genannten Gase. Vorteilhaft wird trockene Luft auf eine Temperatur von 100°C bis 200°C, bevorzugt 130°C bis 170°C erhitzt. Den aus dem Reaktor austretenden Gasen kann die Reaktionswärme entzogen werden und die dabei abgetrennten flüssigen Anteile enthaltend Lösemittel und Ausgangsstoffen können der reaktionsfähigen Mischung erneut zugeführt werden.

Bevorzugt liegt der Absolutdruck im Reaktor zwischen 0,001 und 20 bar, insbesondere 0,1 und 10 bar. Üblicherweise wird bei Atmosphärendruck kondensiert. Die Temperatur im Reaktor liegt bevorzugt zwischen 0°C und 300°C, insbesondere zwischen 20°C und 200°C. Die Reaktoren können zusätzlich beheizt werden, um eine Kondensation an der Reaktorwand zu vermeiden. Die Wandtemperatur liegt um vorteilhaft mindestens 5°C über der Reaktorinnentemperatur.

Die Temperatur während der Sprühkondensation ist üblicherweise konstant. Bei einigen Anwendungsfällen kann es sinnvoll sein, dass ein Temperaturprofil innerhalb des Reaktors herrscht.

In der Regel ist das Produkt einer Sprühkondensation ein festes kugelförmiges Partikel, welcher aus der Gasphase abgeschieden werden kann. Das Reaktionsprodukt kann dem Reaktor in üblicher Weise entnommen werden, vorzugsweise am Boden über eine Förderschnecke oder durch einen Zyklon oder Filter aus dem Gasstrom abgeschieden werden. Anschließend kann das angefallene Pulver mittels Schaufeleinheiten oder Förderschnecken ausgetragen werden. Die erzielten Durchmesser der Harzpartikel liegen typischerweise zwischen 1 µm bis 2 mm, bevorzugt zwischen 5 µm und 1 mm, besonders bevorzugt zwischen 30 µm und 500 µm.

Um eine gewünschte Morphologie der Harzpartikel einzustellen, müssen Bedingungen (Maßnahmen) geschaffen werden, die zu einer Umwandlung innerhalb des Harzpartikels führen, welches während des Polykondensationsprozesses sonst ausgehend von einem Tropfen im Allgemeinen zu einer Vollkugel aushärten würde.

Initiiert wird die Morphologieumwandlung durch eine entsprechende Prozessführung insbesondere eine Temperaturführung während der Sprühkondensation im Sprühreaktor, durch eine gezielte thermische Nachbehandlung in einem weiteren Verfahrensschritt und/oder durch die Beigabe von Zusatzstoffen in der oder den Ausgangslösungen. Bevorzugte Zusatzstoffe sind Treibmittel, beispielsweise organische Lösemittel insbesondere Aceton, oder thermisch zersetzbare Verbindungen wie beispielsweise Azo-Verbindungen, welche unter den herrschenden Reaktionsbedingungen gasförmige Zersetzungsprodukte erzeugen, die zu einem Expandieren der Harzpartikel führen. Weitere bevorzugte Zusatzstoffe sind grenzflächenaktive Stoffe (Tenside), welche die entstehende Schaumstruktur gezielt beeinflussen können.

Die gezielte Beeinflussung erfolgt im wesentlichen durch Variation von Prozessparametern, z. B. Blendendurchmesser, Druck, pH-Wert, Konzentration und Molverhältnisse der Monomere, Feststoffgehalt in der Ausgangslösung sowie Art der Zusatzstoffe. Weitere Prozessparameter beziehen sich auf die Prozessführung, wie Temperatur und Verweilzeit, und auf die apparative Gestaltung zur Durchführung des Verfahrens.

Der Partikeldurchmesser lässt sich durch den Blendendurchmesser und den Volumenstrom einstellen, die Partikelgrößenverteilung wird durch die Vibrationsfrequenz und ggf. dem Zerstäubergasdruck beeinflusst, ferner lässt sich die Porosität und somit die Dichte durch die Säurekonzentration, den Feststoffgehalt und dem Monomerenverhältnis einstellen.

Im ersten Prozessschritt der Sprühkondensation bildet sich abhängig vom Säuregehalt der reaktionsfähigen Mischung und den Prozessbedingungen eine unterschiedlich dicke Schale, die einen Kern bestimmter Restfeuchte und Restreaktivität umschließt. In einem weiteren Trocknungsschritt schäumen und expandieren die Partikel abhängig vom Säuregehalt auf. Bei geringem Säuregehalt tritt keine Veränderung der Vollkugel ein. Erst mit steigendem Säuregehalt beginnen die Harzpartikel aufzuschäumen, wobei die glatte Oberfläche aufplatzt und es bis zu einem vollständigen Abplatzen und Freilegen eines porösen Hohlkörpers kommen kann.

Bevorzugt wird ein Harzpartikel mit einem gewissen Anteil an Restfeuchte bzw. nicht umgesetzten Edukt bzw. nicht vollständig verdampften Lösemittel am Ausgang des Sprühreaktors in einen nachgeschalteten Apparat überführt, in welchem die gewünschte physikalische oder chemische Modifizierung des Produktes erfolgt. Die absolute Restfeuchte im erzeugten Harzpartikel liegt vor der Morphologieumwandlung insbesondere in einem Bereich von 0 bis 30 % und die Restreaktivität zwischen 0 bis 80 %, bevorzugt 20 bis 80 %, insbesondere 50 bis 70 %, des Ausgangswertes. Unter Restreaktivität soll hier die beispielsweise mittels DSC (Differential Scanning Calorimetry) messbare spezifische Reaktionswärme der Harzpartikel bezüglich der spezifischen Reaktionswärme der Ausgangslösung verstanden werden.

Bevorzugt ist eine thermische Nachbehandlung in einem separaten Prozess, insbesondere in einer Trocknungsstufe. Die Nachbehandlung erfolgt abhängig vom Energieeintrag und der angestrebten Schaumstruktur bei einer Verweilzeit von 0,1 Sekunde bis zu 1 Stunde. Die thermische Nachbehandlung findet vorteilhaft schlagartig, d.h. innerhalb eine Reaktionszeit von weniger als einer Sekunde, statt. Die thermische Nachbehandlung führt zum Aufschäumen der Harzpartikel. Die thermische Nachbehandlung wird vorteilhaft bei Temperaturen im Bereich von 100 bis 250°C, bevorzugt bei Temperaturen von 130 bis 180°C, durchgeführt. Bei der Aufschäumung von Harnstoffharzen liegt die optimale Temperatur der Nachbehandlung bei ungefähr 130°C, während die optimale Temperatur zum Aufschäumen von Melaminharzen bei 160°C liegt.

Ferner sind Gegenstand der vorliegenden Erfindung aufgeschäumte Harzpartikel, die nach dem erfindungsgemäßen Verfahren herstellbar sind, wobei der Harzpartikel einen Partikeldurchmesser von 30 bis 500 µm und ein Verhältnis von geschlossenporigen Oberflächenabschnitten zu offenporigen Oberflächenanschnitten von 1:1 bis 1:0, bevorzugt 1:0,4 bis 1:0,2 aufweist.

Die Modifizierung des Produkts wird in einem zur thermischen Trocknung geeigneten Apparat durchgeführt, welcher unterschiedliche, dem Fachmann bekannte Bauformen aufweisen kann. Geeignete Verfahrensvarianten sind eine Verdunstungs-, Kontaktoder Strahlungstrocknung oder eine Hochfrequenztrocknung.

Einstellbare Morphologien der Harzpartikel sind eine Vollkugel oder ein Partikel mit einer geschlossenen Mantelfläche, beispielsweise eine Schale, deren Dicke vorteilhaft 1 % bis 20 % des Partikeldurchmessers beträgt. Der Partikeldurchmesser beträgt vorteilhaft zwischen 30 µm und 500 µm. Bevorzugt wird ein aufgeschäumtes Harzpartikel mit oder ohne glatte Oberflächenabschnitte, wobei sich die glatten Oberflächenabschnitte weitgehend über die gesamte Oberfläche ausbreiten können oder nur einen kleinen Oberflächenteil ausmachen. Vorteilhaft weist die Oberfläche ein Verhältnis von geschlossenporigen Oberflächenabschnitten zu offenporigen Oberflächenanschnitten von 1:1 bis 1:0 auf, bevorzugt 1:0,4 bis 1:0,2. Fehlen glatte Oberflächenabschnitte, so liegt ein durchgängig poröses Partikel vor, der nahezu eine Kugelform oder eine andere Gestalt haben kann.

Eine weitere einstellbare Morphologie ist eine Schale mit einem Durchmesser von 30 µm bis 500 µm, an der sich weitere kleinere Harzpartikel in einer Größenordnung von 10 µm bis 50 µm angelagert haben. Die aufgeschäumten Harzpartikel können geschlossenzellige und/oder offenzellige Schaumstrukturen (z. B. Stegschäume) aufweisen, deren räumliche Strukturen (z. B. Poren, Zellen, Steglängen) typischerweise Abmessungen zwischen 0,1 µm und 200 µm aufweisen.

Es wurde gefunden, dass die Temperatur, der Säuregehalt, die Verweilzeit und das Molverhältnis von Aldehyd zu Harnstoff und/oder Melamin die Wandstärke der Harzpartikel beeinflussen. Die Wandstärke steigt bei höherer Temperatur, bei längerer Verweilzeit und bei einem höheren Verhältnis von Aldehyd zu Harnstoff und/oder Melamin. Die Wandstärke wird hingegen geringer bei einem höheren Säureanteil. Durch eine größere Wandstärke ergibt sich eine kleinere Porengröße.

Tiefe Temperaturen, z. B. von 0 bis -100°C während eines Nachbehandlungsschrittes bewirken ein Abplatzen der die Partikel umgebenden glatten Oberflächenschale, so dass ein poröser Hohlkörper freigelegt wird.

Die Harzpartikel können mit dem Fachmann bekannten Verfahren (im Sprühreaktor integriert oder als nachgeschaltete Einheit) zu Partikelagglomeraten weiterverarbeitet werden.

Maßgeschneiderte Harzpartikel finden eine breite Anwendung. Bevorzugt werden pulverförmige Harze als organische Pigmente verwendet. Aber erst das kontrollierbare Aufschäumen der Harzpartikel führt zu einer verstärkten Pigmentwirkung aufgrund der höheren Lichtbrechung in den Poren.

Ferner können die erfindungsgemäßen Harnstoff-, Melamin- oder Melaminharnstoff-Harze oder deren Gemisch als Füllstoff für sehr leichte Spritzguss- oder Extrusionsmaterialien durch kontrolliertes Aufschäumen und die damit erzielte Dichtereduktion verwendet werden. Durch die Brechungsindexdifferenz in den Poren des aufgeschäumten Harzpartikels zu dem umgebenden Matrixpolymer (beispielsweise Polystyrol oder Polyacrylate) wirken die Füllstoffe gleichzeitig als Pigment.

Wirkstoffe, die Bestandteile der Ausgangslösungen sind, werden während des Kondensationsprozesses in die entstehende Harzmatrix fein verteilt eingebaut und fixiert. So entstehen je nach Charakter der Wirkstoffe funktionelle Füllstoffe oder Beschichtungsstoffe, welche beispielsweise Anwendung in der Papierherstellung als Füllstoff, Retention oder Pigment (z.B. Weißpigment mit UV-Aufheller) finden.

Die der Ausgangslösung zugegebenen Wirkstoffe können später durch Diffusion oder Zerbrechen der Harzpartikel freigesetzt werden. Die in den Hohlräumen und Poren vorhandenen Gase, welche aus dem Kondensationsprozess resultieren, entfalten beispielsweise im Falle von Formaldehyd eine biozide Wirkung.

Geschäumte Harzpartikel eignen sich als Isolierstoff, beispielsweise zur Wärmeisolation oder als Additiv in Bindemitteln zur Herstellung von Leichtholzwerkstoffen.

Als vorteilhaft gestaltet sich die kontrollierte Morphologieumwandlung mittels einer Nachbehandlung, wenn diese erst an dem Ort der Weiterverarbeitung der Harzpartikel erfolgt, beispielsweise beim Einbringen der Harze in Spritzguss- oder Extrusionsmaterialien als Füllstoff.

Die Harzpartikel, bevorzugt die aufgeschäumten Harzpartikel können vorteilhaft als Reinigungsmittel eingesetzt werden. Die Anwendung kann in Form eines Pulvers, eines Granulats, einer Suspension, als Beschichtung eines Formkörpers oder eingebettet in eine Matrix erfolgen.

Das Erzeugen der pulverförmigen Harzpartikel mittels einer Sprühkondensation reduziert durch die Verbindung der Grundoperationen einer Polykondensation mit einer Trocknung die notwendigen verfahrenstechnischen Schritte. Entweder in einem integrierten oder einem nachgeschalteten Verfahrenschritt oder durch eine Kombination beider Schritte können Harzpartikel einer speziellen Morphologie gezielt hergestellt werden. Die so einstellbare Morphologie erweitert das Einsatzgebiet der erzeugten Harzpartikel wesentlich und bietet durch die Vorhersagbarkeit der Produkteigenschaften einen wesentlichen Vorteil.

Der Vorteil der vorliegenden Erfindung besteht ferner in einer Einsparung von Investitionskosten und Energiekosten. Durch die neue Rezeptur können Investitionskosten eingespart werden, da sich die gewünschten Harze in einem Sprühreaktor mit geringerer Höhe im Vergleich zum Stand der Technik herstellen lassen. Ferner lassen sich Energiekosten einsparen, da die Reaktionstemperatur im Vergleich zum Stand der Technik herabgesetzt werden kann.

Darüber hinaus lassen sich mit dem erfindungsgemäßen Verfahren Harzpartikel mit einer sehr dünnen Wandstärke herstellen, die sich insbesondere zum Aufschäumen sehr gut eignen.

### Beispiele:

### a) Herstellung von Harnstoff-Formaldehyd-Harzen gemäß der vorliegenden Erfindung:

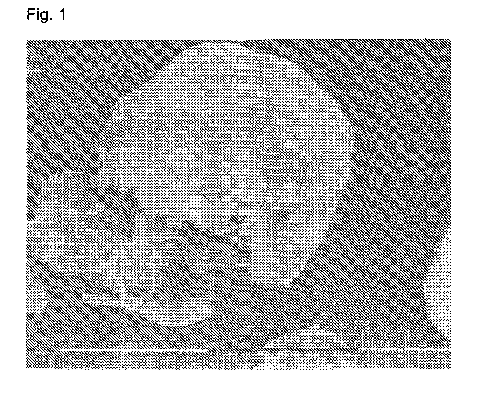

In einem Sprühturm mit einer Höhe von 3 m und einem Durchmesser von 20 cm wurde eine reaktionsfähige Mischung aus 9 Gew.-% Ameisensäure mit Formaldehyd und Harnstoff in einem Molverhältnis von 1,35 mit einem Feststoffgehalt von 30 Massenprozent durch eine Blende mit einem Durchmesser von 75 µm vertropft. Der pH-Wert der reaktionsfähigen Mischung betrug 0,7. Bei einem Trägergasfluss von 10 l/min, einem Zerstäubergasdruck von 0,3 bar und einer Sprühturmtemperatur von 150°C wurden Harnstoff-Formaldehyd-Harze hergestellt (eine detaillierte Beschreibung des apparativen Aufbaus findet sich in der Diplomarbeit auf den Seiten 61 ff von Asif Karim "Untersuchungen zur Entwicklung eines Sprühpolykondensationsverfahrens zur Herstellung von Harnstoff-Formaldehyd Vorkondensaten", 2003, Universität Hamburg).
Der Fortgang der Kondensationsreaktion wurde anhand von Temperaturprofilen gemessen. Nach einer Fallhöhe von 1,5 Metern war die Kondensationsreaktion abgeschlossen.
Die thermische Nachbehandlung wurde bei einer Temperatur von 130°C durchgeführt. Es wurde ein aufgeschäumtes Partikel gemäß Figur 1 erhalten. Die Wandstärke der aufgeschäumten Partikel beträgt: 0,2 µm.

### b) Herstellung von Harnstoff-Formaldehyd-Harzen gemäß dem Stand der Technik:

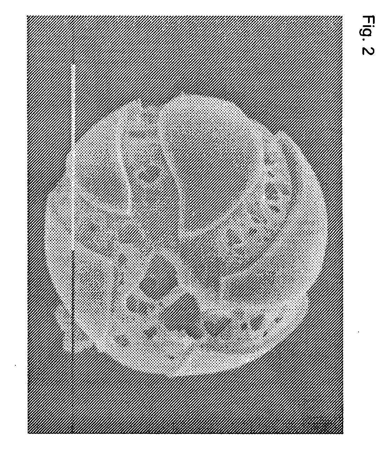

In einem Sprühturm mit einer Höhe von 10 m und einem Durchmesser von 2 m wurde eine reaktionsfähige Mischung aus 2,0 Gew.-% Ameisensäure mit Formaldehyd und Harnstoff in einem Molverhältnis von 1,35 mit einem Feststoffgehalt von 30 Massenprozent durch eine Blende mit einem Durchmesser von 75 µm vertropft. Der pH-Wert der reaktionsfähigen Mischung betrug 1,5. Bei einem Trägergasfluss von 10 l/min, einem Zerstäubergasdruck von 0,1 bar und einer Sprühturmtemperatur von 150°C wurden Harnstoff-Formaldehyd-Harze hergestellt. Der Fortgang der Kondensationsreaktion wurde anhand von Temperaturprofilen gemessen. Nach einer Fallhöhe von Metern war die Kondensationsreaktion abgeschlossen.
Die thermische Nachbehandlung wurde bei einer Temperatur von 130°C durchgeführt. Es wurde ein aufgeschäumtes Partikel gemäß Figur 2 erhalten. Die Wandstärke der aufgeschäumten Partikel beträgt: 7 µm.

In den Figuren 1 und 2 stellen der weiße und der schwarze Balken jeweils einen Abstand von 100 µm dar.

## Patentansprüche

1. Verfahren der Sprühkondensation zur Herstellung von getrockneten Harzen in Pulverform aus Harnstoff und/oder Melamin und mindestens einem Aldehyd durch Vertropfung, **dadurch gekennzeichnet, dass** die reaktionsfähige Mischung aus Harnstoff und/oder Melamin und mindestens einem Aldehyd in situ im Sprühreaktor erzeugt wird und die reaktionsfähige Mischung einen pH-Wert hat, der zwischen -0,75 und 0,75 liegt.

2. Verfahren nach Anspruch 1, **dadurch gekennzeichnet, dass** als Aldehyd Formaldehyd verwendet wird.

3. Verfahren nach Anspruch 1 bis 2, **dadurch gekennzeichnet, dass** die reaktionsfähige Mischung Treibmittel oder thermisch zersetzbare Verbindungen enthält.

4. Verfahren nach Anspruch 3, **dadurch gekennzeichnet, dass** die reaktionsfähige Mischung Aceton enthält.

5. Verfahren nach einem der Ansprüche 1 bis 4, **dadurch gekennzeichnet, dass** die erzeugten Harzpartikel einer der Sprühkondensation nachgeschalteten thermischen Behandlung bei einer Temperatur von 100 bis 250°C unterworfen werden.

6. Verfahren nach Anspruch 5, **dadurch gekennzeichnet, dass** die Verweilzeit der Harzpartikel in der thermischen Nachbehandlung weniger als eine Sekunde beträgt.

## Claims

1. A process for spray condensation for preparing dried resins in powder form from urea and/or melamine and at least one aldehyde by dropletization, which comprises generating the reactive mixture of urea and/or melamine and at least one aldehyde in situ in the spray reactor and the reactive mixture having a pH between -0.75 and 0.75.

2. The process according to claim 1, wherein the aldehyde used is formaldehyde.

3. The process according to claim 1 or 2, wherein the reactive mixture comprises blowing agents or thermally decomposable compounds.

4. The process according to claim 3, wherein the reactive mixture comprises acetone.

5. The process according to any of claims 1 to 4, wherein the resin beads obtained are subjected to a thermal treatment at a temperature of from 100 to 250°C downstream of the spray condensation.

6. The process according to claim 5, wherein the residence time of the resin beads in the thermal after treatment is less than one second.

## Revendications

1. Procédé de condensation par pulvérisation pour la préparation de résines séchées sous forme de poudre à partir d'urée et/ou de mélamine et d'au moins un aldéhyde par formation de gouttes, **caractérisé en ce que** le mélange apte à une réaction d'urée et/ou de mélamine et d'au moins un aldéhyde est produit in situ dans le réacteur de pulvérisation et le mélange apte à une réaction présente un pH qui est situé entre -0,75 et 0,75.

2. Procédé selon la revendication 1, **caractérisé en ce que** du formaldéhyde est utilisé comme aldéhyde.

3. Procédé selon la revendication 1 à 2, **caractérisé en ce que** le mélange apte à une réaction contient des agents gonflants ou des composés thermiquement décomposables.

4. Procédé selon la revendication 3, **caractérisé en ce que** le mélange apte à une réaction contient de l'acétone.

5. Procédé selon l'une quelconque des revendications 1 à 4, **caractérisé en ce que** les particules de résines produites sont soumises à un traitement thermique, disposé en aval de la condensation par pulvérisation, à une température de 100 à 250°C.

6. Procédé selon la revendication 5, **caractérisé en ce que** le temps de séjour des particules de résine dans le post-traitement thermique est inférieur à une seconde.
